# EUROPEAN PATENT APPLICATION

(11) **EP 4 693 208 A1**
(43) Date of publication of application: **11.02.2026**
(21) Application number: 24778740.1
(22) Date of filing: 09.02.2024
(51) Int. Cl.: G06T 19/00, H04N 23/60

(54) **VIRTUAL SPACE MANAGEMENT DEVICE, VIRTUAL SPACE MANAGEMENT DEVICE OPERATION METHOD, AND VIRTUAL SPACE MANAGEMENT DEVICE OPERATION PROGRAM**

(30) Priority: 31.03.2023 JP 2023058587
(71) Applicant: FUJIFILM Corporation, Tokyo Tokyo 106-8620 (JP)
(72) Inventor: KOBAYASHI, Toshiki, Saitama-shi, Saitama 331-9624 (JP); OKIYAMA, Kazuya, Saitama-shi, Saitama 331-9624 (JP); YAMAJI, Kei, Saitama-shi, Saitama 331-9624 (JP)
(74) Representative: Meissner Bolte Partnerschaft mbB
(86) International application number: PCT/JP2024/004626
(87) International publication number: WO 2024/202595

(57) **Abstract**

A virtual space management apparatus that manages a virtual space including an object includes a processor, in which the processor generates a three-dimensional photograph in the virtual space, as the object.

## Description

### BACKGROUND OF THE INVENTION

### 1. Field of the Invention

The technology of the present disclosure relates to a virtual space management apparatus, an operation method of a virtual space management apparatus, and an operation program of a virtual space management apparatus.

### 2. Description of the Related Art

JP2009-176025A describes a virtual space communication system comprising a server device that provides a virtual space in which a character that operates as an alter ego of a user is disposed, and a user terminal that is connected to the server device via a network and that is used by the user to operate the character. In the virtual space communication system, a virtual camera is provided in the virtual space for the character to perform capturing in the virtual space. The user terminal is connected to a printing device that prints images. Then, based on the operation by the user on the character, a captured image in the virtual space obtained through capturing with the virtual camera is acquired from the server device and printed by the printing device.

"VRChat instant camera (polaroid camera) with 'Azul 2', a black panther beastman avatar with griffon wings that can take stereoscopic photographs, draw handwritten text, and even fly!, compatible with physbone [accessory for avatar]", searched on February 26, 2023, Internet <URL: https://booth.pm/ja/items/3961856>, describes a mode in which a photograph of the virtual space is captured using an instant camera operated by an avatar in the virtual space.

### SUMMARY OF THE INVENTION

One embodiment according to the technology of the present disclosure provides a virtual space management apparatus, an operation method of a virtual space management apparatus, and an operation program of a virtual space management apparatus that are capable of further stimulating an interest of a user.

According to the present disclosure, there is provided a virtual space management apparatus that manages a virtual space including an object, the virtual space management apparatus comprising: a processor, in which the processor is configured to: generate a three-dimensional photograph in the virtual space, as the object.

It is preferable that the processor is configured to: generate an avatar of a user, as the object.

It is preferable that the processor is configured to: generate a camera that receives an operation from a user, as the object.

It is preferable that the processor is configured to: in a case where the operation by the user on the camera is received, generate the three-dimensional photograph.

It is preferable that the three-dimensional photograph occupies a certain volume in the virtual space.

It is preferable that the three-dimensional photograph occupies a columnar region.

It is preferable that the columnar region is a rectangular parallelepiped region.

It is preferable that the three-dimensional photograph includes one or more subjects in the virtual space.

It is preferable that the subject includes a first subject and a background.

It is preferable that the three-dimensional photograph includes a bottom surface portion and a back surface portion.

It is preferable that the processor is configured to: display the first subject at a preset position on the bottom surface portion; and display the background on the back surface portion.

It is preferable that the processor is configured to: receive a switching instruction of a viewpoint from the user; and switch display of the first subject and the background in response to the switching instruction.

It is preferable that the processor is configured to: prepare a plurality of two-dimensional images of the first subject and the background viewed from different viewpoints; and switch display of the first subject and the background by switching display of the two-dimensional images in response to the switching instruction.

It is preferable that the processor is configured to: perform first effect processing on the first subject and the background according to distances, in the virtual space, between the camera, and the first subject and the background.

It is preferable that the processor is configured to: perform second effect processing on the first subject and the background according to a direction of illumination light in the virtual space.

It is preferable that the processor is configured to: in a case where a predetermined operation by the user on the three-dimensional photograph is received, generate the first subject as an object separated from the three-dimensional photograph.

It is preferable that, in the virtual space, a plurality of users engage in activities as respective avatars, and ownership information indicating which user owns the object is stored in association with the object.

It is preferable that the object is buyable and sellable, and the processor is configured to: update the ownership information in response to the buying and selling.

It is preferable that, in an initial state, an identifier indicating that the three-dimensional photograph is owned by a user who has captured the three-dimensional photograph is stored in the three-dimensional photograph as the ownership information.

It is preferable that the three-dimensional photograph is buyable and sellable, and the processor is configured to: update the identifier in response to the buying and selling.

It is preferable that setting information indicating whether or not to permit the object to be captured in the three-dimensional photograph is stored in association with the object.

It is preferable that the processor is configured to: receive a switching instruction of a viewpoint from a user; and switch display of the three-dimensional photograph in response to the switching instruction.

It is preferable that the three-dimensional photograph is editable.

It is preferable that the three-dimensional photograph has a certain shape and size in the virtual space.

It is preferable that the processor is configured to: recognize a size of the first subject in the virtual space; and scale the first subject according to the recognized size to fit the first subject within the certain shape and size of the three-dimensional photograph.

It is preferable that the certain size is a size that fits within a palm of an avatar of the user.

It is preferable that the camera is an instant camera, and the three-dimensional photograph is an instant photograph ejected from the instant camera, and the processor is configured to: cause an image to appear on the instant photograph after a predetermined time has elapsed from the ejection.

It is preferable that, in the virtual space, a plurality of users engage in activities as respective avatars, ownership information indicating which user owns the three-dimensional photograph is stored in the three-dimensional photograph in association with the three-dimensional photograph, and the three-dimensional photograph is transferable between the avatars, and the processor is configured to: update the ownership information to transfer ownership of the three-dimensional photograph from a user associated with an avatar that has transferred the three-dimensional photograph to a user associated with an avatar to which the three-dimensional photograph has been transferred.

It is preferable that the processor is configured to: display a frame indicating a region to be captured as the three-dimensional photograph on a display screen of the virtual space.

It is preferable that the processor is configured to: display a frame indicating the first subject on a display screen of the virtual space.

According to the present disclosure, there is provided an operation method of a virtual space management apparatus that manages a virtual space including an object, the operation method comprising: generating a three-dimensional photograph in the virtual space, as the object.

According to the present disclosure, there is provided an operation program of a virtual space management apparatus that manages a virtual space including an object, the operation program causing a computer to execute a process comprising: generating a three-dimensional photograph in the virtual space, as the object.

### BRIEF DESCRIPTION OF THE DRAWINGS

FIG. 1 is a diagram showing a user terminal and a virtual space management server.
FIG. 2 is a diagram showing a virtual space and avatars.
FIG. 3 is a block diagram showing a computer that constitutes the user terminal and the virtual space management server.
FIG. 4 is a block diagram showing a processing unit of a CPU of the user terminal.
FIG. 5 is a block diagram showing a processing unit of a CPU of the virtual space management server.
FIG. 6 is a diagram showing object information.
FIG. 7 is a diagram showing a state in which ownership information is updated in response to buying and selling of an object.
FIG. 8 is a diagram showing a state in which the ownership information is updated in response to buying and selling of a three-dimensional photograph.
FIG. 9 is a diagram showing a state in which the ownership information is updated in response to a transfer of the three-dimensional photograph.
FIG. 10 is a diagram showing a virtual space display screen in a shooting mode.
FIG. 11 is a diagram showing a generation process of the three-dimensional photograph in a case where a selection instruction of a release button is received.
FIG. 12 is a flowchart showing details of scaling processing.
FIG. 13 is a flowchart showing details of first effect processing.
FIG. 14 is a flowchart showing details of second effect processing.
FIG. 15 is a table showing two-dimensional images generated for each viewpoint.
FIG. 16 is a diagram showing a method of displaying the three-dimensional photograph.
FIG. 17 is a diagram showing a state in which display of the three-dimensional photograph is switched in response to a switching instruction of the viewpoint.
FIG. 18 is a diagram showing a state in which a main subject is separated from the three-dimensional photograph.
FIG. 19 is a diagram showing a state in which the three-dimensional photograph is edited.
FIG. 20 is a flowchart showing processing of the virtual space management server.
FIG. 21 is a diagram showing another example of the three-dimensional photograph.

### DESCRIPTION OF THE PREFERRED EMBODIMENTS

### [First Embodiment]

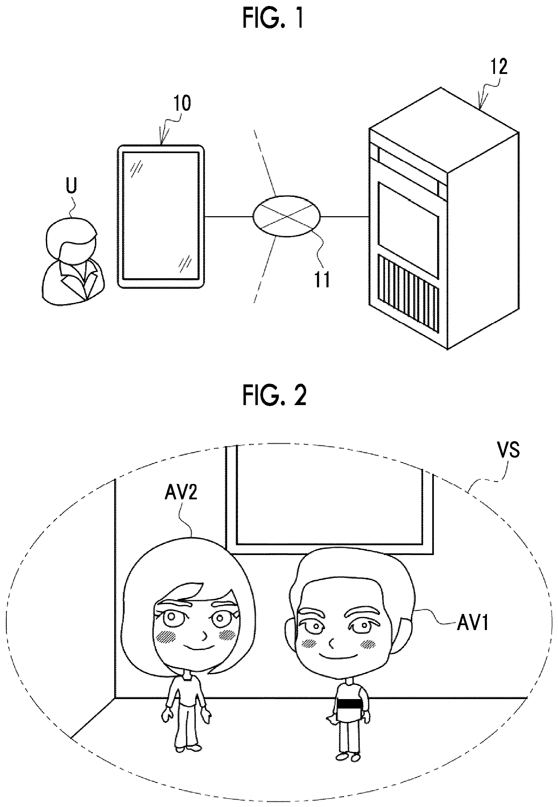

As shown in FIG. 1 as an example, a user U owns a user terminal 10. The user terminal 10 is, specifically, a smartphone, a tablet terminal, a notebook-type personal computer, a desktop-type personal computer, or the like. In addition, the user terminal 10 may be a wearable device such as a head-mounted display having a display function in a portion that covers the eyes. The user terminal 10 is connected to a virtual space management server 12 via a network 11 in a mutually communicable manner. The network 11 is, for example, a wide area network (WAN), such as the Internet or a public communication network.

The virtual space management server 12 is, for example, a server computer, a workstation, or the like and is an example of a "virtual space management apparatus" according to the technology of the present disclosure. A plurality of user terminals 10 of a plurality of users U are connected to the virtual space management server 12 via the network 11.

As shown in FIG. 2 as an example, the virtual space management server 12 manages a virtual space VS to be provided to the user U through the user terminal 10. The virtual space VS is a space of three-dimensional computer graphics (CG) that can be used by a computer, and is a place where various social activities, such as studying, working, shopping, and playing, are performed separately from a real space while the plurality of users U communicate with each other. The plurality of users U engage in activities as respective avatars AV in the virtual space VS. FIG. 2 shows, as an example, a state in which an avatar AV1 and an avatar AV2 are standing side by side.

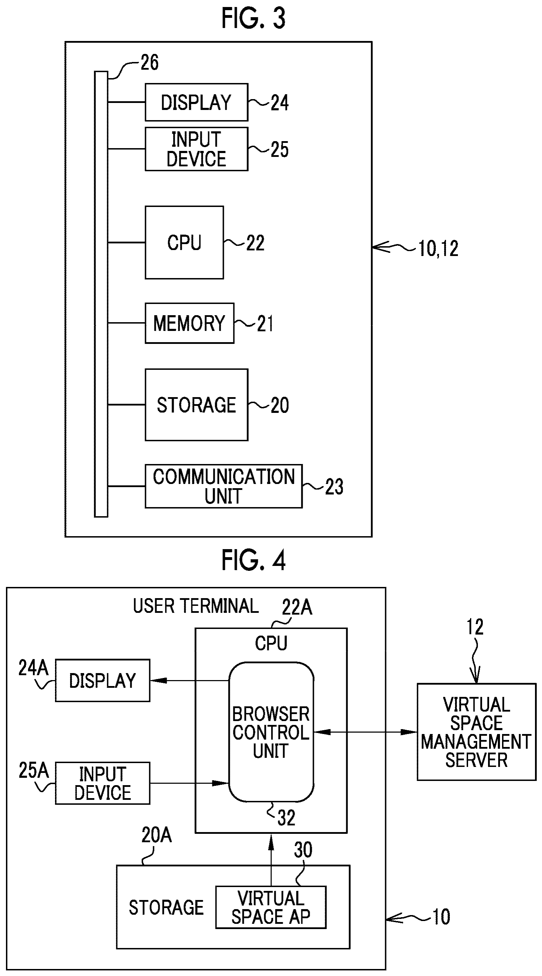

As shown in FIG. 3 as an example, computers that constitute the user terminal 10 and the virtual space management server 12 basically have the same configuration and comprise a storage 20, a memory 21, a central processing unit (CPU) 22, a communication unit 23, a display 24, and an input device 25. These are connected to each other via a busline 26.

The storage 20 is a hard disk drive that is either incorporated into the computers that constitute the user terminal 10 and the virtual space management server 12, or connected to the computers through a cable or a network. Alternatively, the storage 20 is a disk array, with a plurality of hard disk drives connected in parallel. The storage 20 stores control programs such as an operating system, various application programs (hereinafter abbreviated as AP), and various types of data associated with these programs. Note that a solid-state drive may be used, instead of the hard disk drive.

The memory 21 is a work memory for the CPU 22 to execute processing. The CPU 22 loads the program stored in the storage 20 into the memory 21 and executes processing in accordance with the program. Consequently, the CPU 22 comprehensively controls each unit of the computer. The CPU 22 is an example of a "processor" according to the technology of the present disclosure. Note that the memory 21 may be incorporated into the CPU 22.

The communication unit 23 is a network interface that performs transmission control of various types of information via the network 11 or the like. The display 24 displays various screens. Various screens are provided with operation functions through a graphical user interface (GUI). The computers that constitute the user terminal 10 and the virtual space management server 12 receive input of an operation instruction from the input device 25 through various screens. The input device 25 is a keyboard, a mouse, a touch panel, a microphone for voice input, and the like.

In the following description, the subscript "A" is added to the reference numerals of the respective units of the computer that constitutes the user terminal 10 (the storage 20, the CPU 22, the display 24, and the input device 25), and the subscript "B" is added to the reference numerals of the respective units of the computer that constitutes the virtual space management server 12 (the storage 20, the CPU 22, and the input device 25) for distinction.

As shown in FIG. 4 as an example, a virtual space AP 30 is stored in the storage 20A of the user terminal 10. The virtual space AP 30 is installed in the user terminal 10 by the user U. The virtual space AP 30 is an AP for the user U to enjoy the virtual space VS on the user terminal 10. In a case where the virtual space AP 30 is activated, the CPU 22A of the user terminal 10 functions as a browser control unit 32 in cooperation with the memory 21 and the like. The browser control unit 32 controls the operation of a dedicated web browser of the virtual space AP 30.

The browser control unit 32 generates various screens. The browser control unit 32 displays the various generated screens on the display 24A. Additionally, the browser control unit 32 receives various operation instructions input by the user U from the input device 25A through various screens. The browser control unit 32 transmits the received operation instruction to the virtual space management server 12 together with a terminal identification data (ID) for uniquely identifying each user terminal 10. In the following description, a case will be described as an example in which the input device 25A is a touch panel.

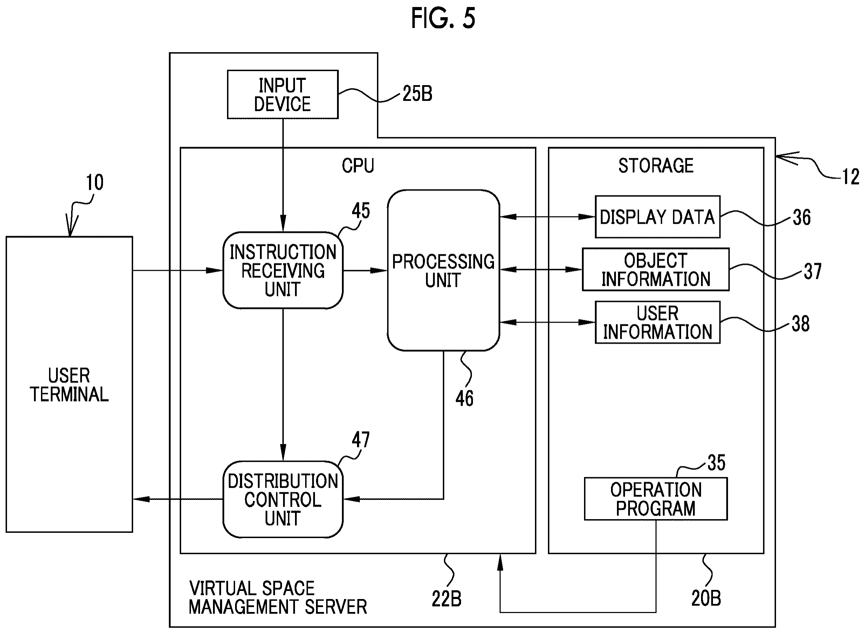

As shown in FIG. 5 as an example, an operation program 35 is stored in the storage 20B of the virtual space management server 12. The operation program 35 is an AP for causing the computer that constitutes the virtual space management server 12 to function as a "virtual space management apparatus" according to the technology of the present disclosure. That is, the operation program 35 is an example of an "operation program of a virtual space management apparatus" according to the technology of the present disclosure.

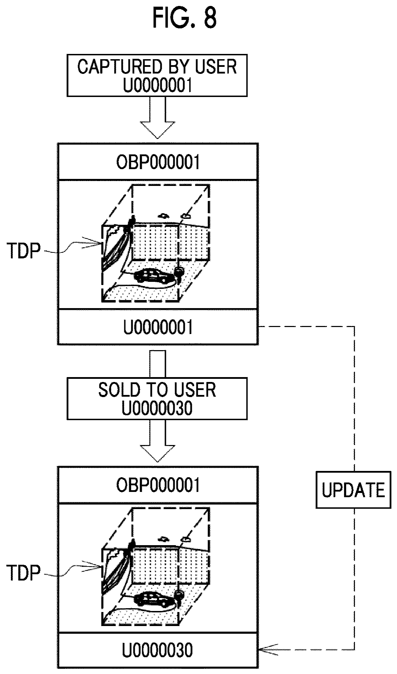

The storage 20B also stores display data 36, object information 37, user information 38, and the like. The display data 36 is various pieces of three-dimensional CG data necessary for displaying the virtual space VS. The object information 37 is information on various objects included in the virtual space VS. The object is, for example, a virtual object with which the avatar AV can be involved, such as being grasped and operated, ridden and operated, or worn by the avatar AV. The object is, specifically, various persons, buildings, and articles disposed in the virtual space VS. The persons include the avatars AV shown in FIG. 2 and characters created by a creator of the virtual space VS. In addition, a three-dimensional photograph TDP (refer to FIG. 8), which will be described below, is also a type of object. The user information 38 includes a user ID for uniquely identifying each user U, a password set by each user U, a terminal ID of each user terminal 10, and the like. The user information 38 includes, in addition to the above, each user U's nickname, age, gender, family structure, current prefecture of residence, home prefecture, hobbies, and the like, which are valid in the virtual space VS.

In a case where the operation program 35 is activated, the CPU 22B of the virtual space management server 12 functions as an instruction receiving unit 45, a processing unit 46, and a distribution control unit 47 in cooperation with the memory 21 and the like.

The instruction receiving unit 45 receives various operation instructions and the terminal ID of the user U from the user terminal 10. The instruction receiving unit 45 outputs the various operation instructions to the processing unit 46 and outputs the terminal ID to the distribution control unit 47. Additionally, the instruction receiving unit 45 also receives various operation instructions from the creator of the virtual space VS through the input device 25B.

The processing unit 46 performs overall processing related to the management of the virtual space VS in response to various operation instructions from the instruction receiving unit 45. The processing performed by the processing unit 46 is, for example, authentication processing of the user U, display update processing of the virtual space VS, position update processing of the object, update processing of the display data 36, update processing of the object information 37, update processing of the user information 38, and the like.

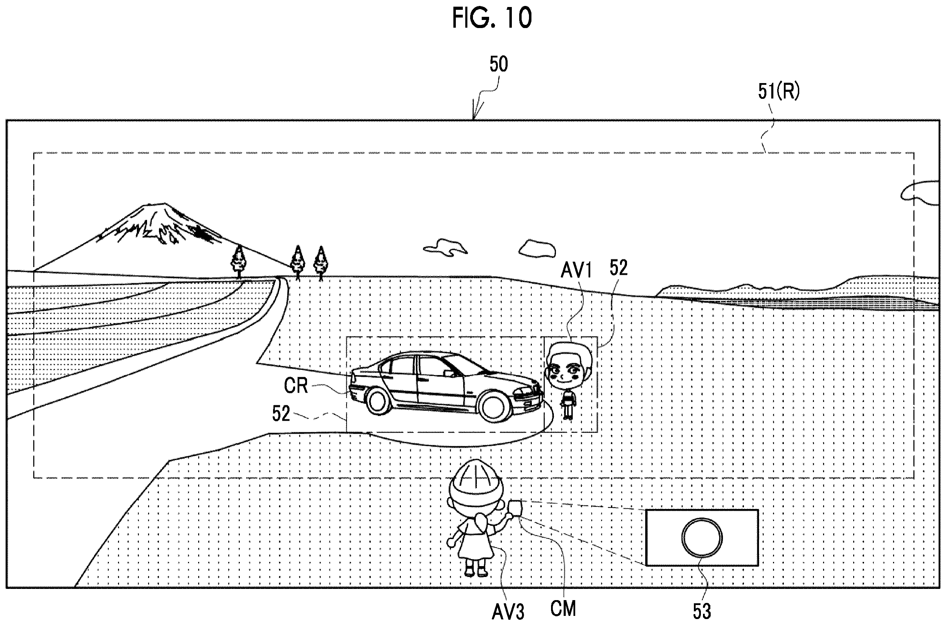

The authentication processing of the user U is processing of collating the user ID and the password included in an authentication instruction as the operation instruction with the user ID and the password stored in the user information 38. The display update processing of the virtual space VS is, for example, processing of reading out the display data 36 from the storage 20B in response to a movement instruction of the avatar AV as the operation instruction and outputting a virtual space display screen 50 (refer to FIG. 10) generated based on the read-out display data 36 to the distribution control unit 47. The position update processing of the object is processing of updating position information of the object in response to a movement instruction of the object as the operation instruction.

The update processing of the display data 36 is processing of storing the display data 36 newly created by the creator of the virtual space VS in the storage 20B in response to an update instruction of the display data 36 as the operation instruction. The update processing of the object information 37 is processing of updating various items that constitute the object information 37 and processing of adding information on an object newly created by the creator of the virtual space VS, in response to an update instruction of the object information 37 as the operation instruction. The update processing of the user information 38 is processing of updating various items that constitute the user information 38 and processing of adding information on the new user U, in response to an update instruction of the user information 38 as the operation instruction.

The distribution control unit 47 controls the distribution of the virtual space display screen 50 to the user terminal 10. In this case, the distribution control unit 47 specifies the user terminal 10, to which the virtual space display screen 50 is to be distributed, based on the terminal ID from the instruction receiving unit 45.

The distribution control unit 47 distributes and outputs the virtual space display screen 50 to the user terminal 10 in a format of screen data for web distribution created using, for example, a markup language such as Extensible Markup Language (XML). The browser control unit 32 of the user terminal 10 reproduces various screens to be displayed on a web browser based on the screen data and displays the various screens on the display 24A. Note that, instead of XML, another data description language, such as JavaScript (registered trademark) Object Notation (JSON), may be used.

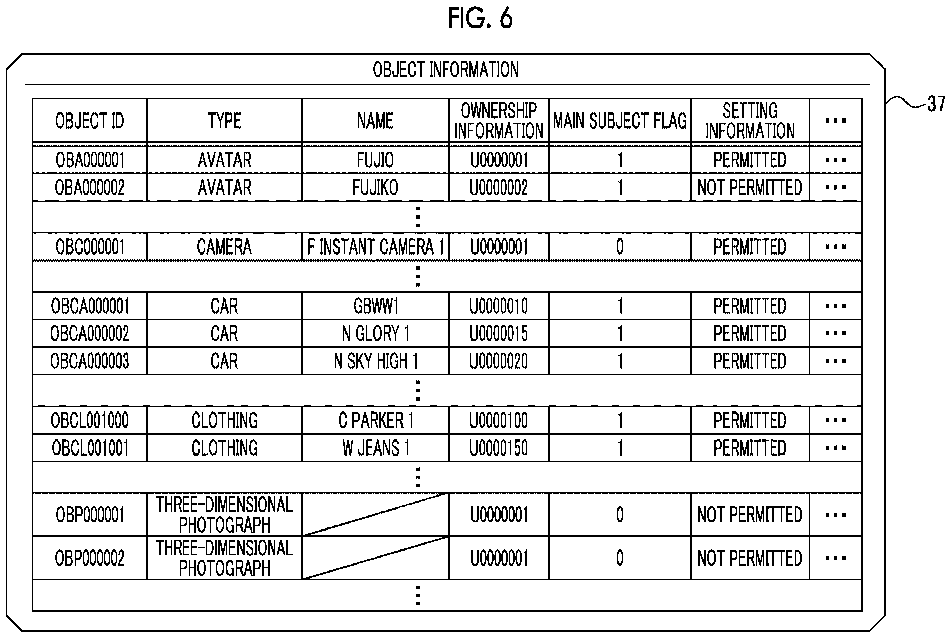

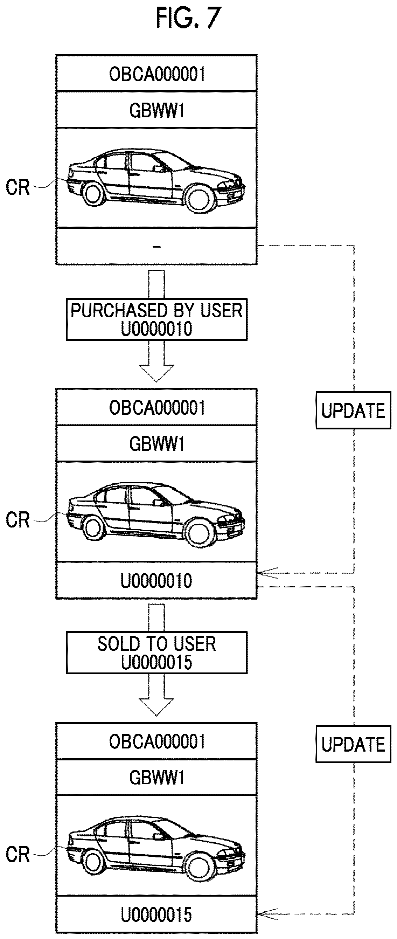

As shown in FIG. 6 as an example, the object information 37 is information in which, for each object ID for uniquely identifying each object, an object type, an object name, ownership information, a main subject flag, setting information, and the like are registered. The type includes various types, such as the avatar AV, a camera CM (refer to FIG. 10), a car CR (refer to FIG. 7), clothing, and the three-dimensional photograph TDP. As for the name, in a case of the avatar AV, the name given to the avatar AV by the user U is registered. For articles such as the camera CM and the car CR, the name of the article is registered. No name is registered for the three-dimensional photograph TDP. FIG. 6 shows, as an example, an instant camera as the camera CM. Hereinafter, the camera CM will be described as an instant camera.

The ownership information is information indicating which user U owns the object. Specifically, the ownership information is the user ID of the user U who owns the object. The user ID is an example of an "identifier" according to the technology of the present disclosure.

The main subject flag is a flag indicating whether or not the object is treated as the main subject when being captured by the camera CM. Here, the main subject is a subject that the user U mainly intends to capture. An object for which "1" is registered in the main subject flag is treated as the main subject, and an object for which "0" is registered in the main subject flag is not treated as the main subject. The main subject flag is registered by the creator of the virtual space VS. The main subject is an example of a "first subject" according to the technology of the present disclosure.

The setting information is information indicating whether or not to permit the object to be captured in the three-dimensional photograph TDP. An object for which "permitted" is registered in the setting information can be captured in the three-dimensional photograph TDP by a user U other than the user U who owns the object. On the other hand, an object for which "not permitted" is registered in the setting information cannot be captured in the three-dimensional photograph TDP by another user U. The setting information is registered by the user U who owns the object. The user U registers "not permitted" in the setting information of an object that the user U does not want another user U to casually capture in the three-dimensional photograph TDP, such as a highly rare avatar AV or a highly rare object, for example. That is, the setting information is, so to speak, information intended to protect portrait rights in the virtual space VS. Although not shown, the three-dimensional photograph TDP also stores a shooting date and time based on the time in the virtual space VS, a shooting position in the virtual space VS, and the like.

As shown in FIGS. 7 and 8 as an example, the object is buyable and sellable. The processing unit 46 updates the ownership information of the object, here, the user ID, in response to the buying and selling of the object. For example, currency valid in the virtual space VS is used for buying and selling objects. Note that "buying and selling" includes a case where a user U purchases an object prepared by the creator of the virtual space VS and a case where an object is sold from one user U to another user U.

FIG. 7 shows, as an example, a case where a user U having a user ID "U0000010" purchases a car CR having an object ID "OBCA000001" and a name "GBWW1". In this case, the processing unit 46 updates the user ID of the ownership information of the car CR having the object ID "OBCA000001" and the name "GBWW1" from an unregistered state to "U0000010". In addition, FIG. 7 shows, as an example, a case where the car CR having the object ID "OBCA000001" and the name "GBWW1" is sold from the user U having the user ID "U0000010" to a user U having a user ID "U0000015". In this case, the processing unit 46 updates the user ID of the ownership information of the car CR having the object ID "OBCA000001" and the name "GBWW1" from "U0000010" to "U0000015".

FIG. 8 shows, as an example, a case where a three-dimensional photograph TDP of an object ID "OBP000001" is captured by a user U having a user ID "U0000001" and is sold from the user U having the user ID "U0000001" to a user U having a user ID "U0000030". In this case, the processing unit 46 updates the user ID of the ownership information of the three-dimensional photograph TDP of the object ID "OBP000001" from "U0000001" to "U0000030". In this manner, the three-dimensional photograph TDP is a target for buying and selling. Additionally, in an initial state in which the three-dimensional photograph TDP has not yet been bought or sold, the user ID indicating that the three-dimensional photograph TDP is owned by the user U who has captured the three-dimensional photograph TDP, here, "U0000001", is stored as the ownership information. Then, the user ID of the ownership information is updated in response to the buying and selling.

Note that the three-dimensional photograph TDP includes not only those captured by the user U, but also those prepared by the creator of the virtual space VS. In the initial state, no user ID as ownership information is registered in such a three-dimensional photograph TDP.

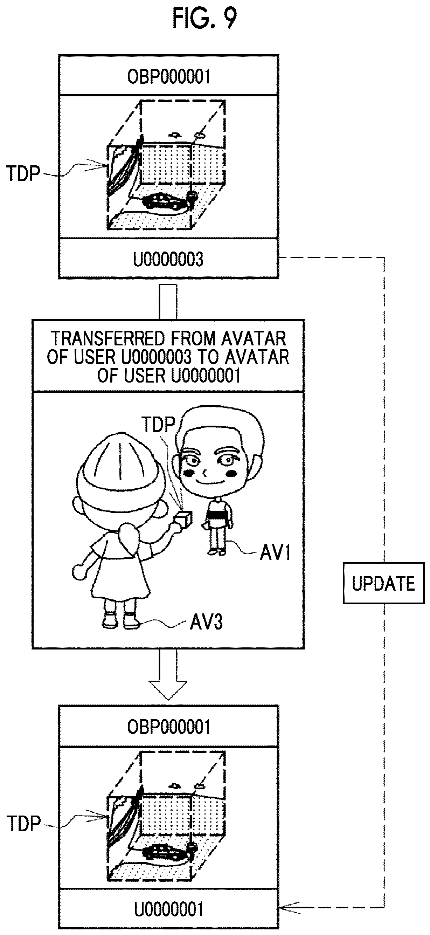

As shown in FIG. 9, the three-dimensional photograph TDP is transferable between the avatars AV. The transfer of the three-dimensional photograph TDP is performed, for example, by handing the three-dimensional photograph TDP from one avatar AV to another in the form of a gift. In a case where the three-dimensional photograph TDP is transferred between the avatars AV, the processing unit 46 updates the ownership information to transfer ownership of the three-dimensional photograph TDP from the user U associated with the avatar AV that has transferred the three-dimensional photograph TDP to the user U associated with the avatar AV to which the three-dimensional photograph TDP has been transferred.

FIG. 9 shows, as an example, a case where the three-dimensional photograph TDP of the object ID "OBP000001" is transferred from an avatar AV3 of a user U having a user ID "U0000003" to the avatar AV1 of the user U having the user ID "U0000001". In this case, the processing unit 46 updates the user ID of the ownership information of the three-dimensional photograph TDP of the object ID "OBP000001" from "U0000003" to "U0000001".

The user U who owns the camera CM can activate the shooting mode in the virtual space VS. The shooting mode is a mode in which the virtual space VS can be captured by the camera CM as if the virtual space VS were a real space. In a case where the shooting mode is activated, the processing unit 46 generates the virtual space display screen 50 shown in FIG. 10 as an example. The virtual space display screen 50 is an example of a "display screen of the virtual space" according to the technology of the present disclosure.

In FIG. 10, the virtual space display screen 50 displays a landscape in the virtual space VS including Mount Fuji, low mountains, cedar trees, clouds, the sky, a road, a grassland, and a parking space; the avatar AV1 and the avatar AV3; and the car CR owned by the user U of the avatar AV1, which is the car CR parked in the parking space. Then, a scene is displayed in which the avatar AV3 is holding the camera CM, which is an instant camera owned by the avatar AV3, and is about to capture the car CR and the avatar AV1 standing side by side next to the car CR.

The processing unit 46 displays a frame (hereinafter referred to as a shooting region frame) 51 indicating a region to be captured as the three-dimensional photograph TDP, that is, a shooting region R, on the virtual space display screen 50. The landscape including Mount Fuji, low mountains, cedar trees, clouds, the sky, the road, the grassland, and the parking space, the avatar AV1 and the car CR, and the like included in the shooting region frame 51 are examples of a "subject" according to the technology of the present disclosure.

The processing unit 46 searches, as the main subject, for an object for which "1" is registered in the main subject flag of the object information 37, in a center portion of the shooting region frame 51. The processing unit 46 displays, on the virtual space display screen 50, a frame (hereinafter referred to as a main subject frame) 52 indicating the main subject that has been searched for. FIG. 10 shows, as an example, a case where the avatar AV1 and the car CR are searched for as the main subject.

In a case where the avatar AV3 holding the camera CM moves, the processing unit 46 updates the display of the virtual space VS in accordance with the moved position of the avatar AV3 and changes the display position of the shooting region frame 51. In addition, in a case where the avatar AV1 and/or the car CR, which is the main subject, moves, the processing unit 46 changes the display position of the main subject frame 52 in accordance with the moved position of the avatar AV1 and/or the car CR.

In a case where no main subject is present in the center portion of the shooting region frame 51, the processing unit 46 expands the search range of the main subject to a peripheral portion of the shooting region frame 51. In a case where no main subject is present even after the search range is expanded, the processing unit 46 does not display the main subject frame 52 on the virtual space display screen 50.

A release button 53 of the camera CM is enlarged and displayed next to the avatar AV3. The release button 53 can be selected by the user U using a finger or the like. That is, the camera CM receives the operation from the user U. In a case where the setting information of the main subject that has been searched for is "not permitted", the processing unit 46 displays, on the virtual space display screen 50, a message indicating that the main subject is not permitted to be captured in the three-dimensional photograph TDP. Then, by temporarily disabling the selection of the release button 53, the processing unit 46 prevents the main subject that is not permitted to be captured in the three-dimensional photograph TDP from being captured.

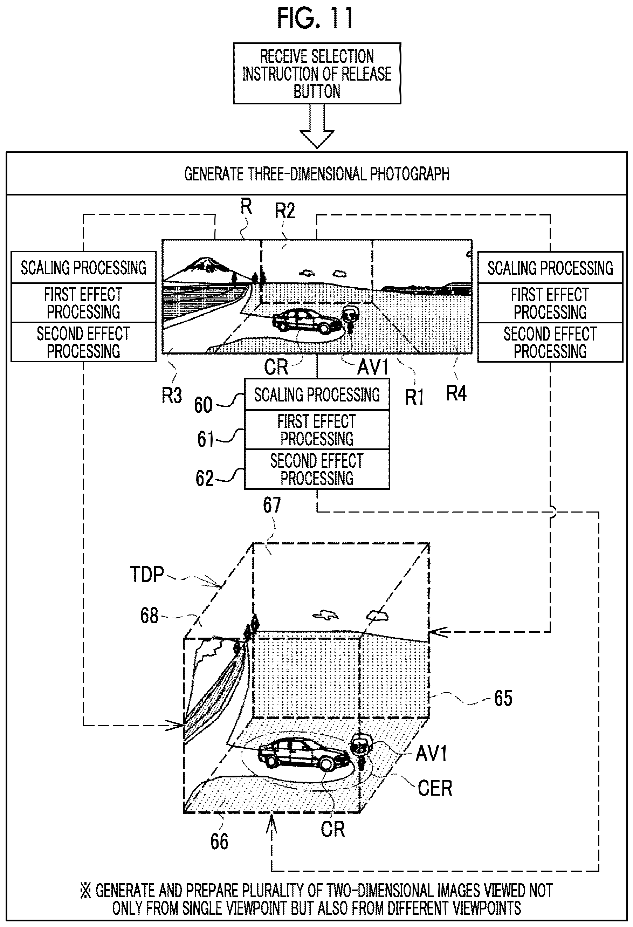

As shown in FIG. 11 as an example, in a case where the release button 53 is selected by the user U on the virtual space display screen 50 shown in FIG. 10, and a selection instruction of the release button 53 is received by the instruction receiving unit 45, the processing unit 46 generates the three-dimensional photograph TDP.

The processing unit 46 first recognizes distances, in the virtual space VS, between the camera CM, and the main subject and the background. The distances between the camera CM, and the main subject and the background can be derived from the position information of each object in the virtual space VS. Here, the background refers to a subject other than the main subject. In FIG. 11, the background is a landscape including Mount Fuji, low mountains, cedar trees, clouds, the sky, the road, the grassland, and the parking space, other than the avatar AV1 and the car CR, which are the main subjects.

Additionally, the processing unit 46 recognizes the position of the main subject in the shooting region R. The processing unit 46 divides the shooting region R, in a case where the release button 53 is selected, into a first region R1, a second region R2, a third region R3, and a fourth region R4, based on recognition results of the distances between the camera CM, and the main subject and the background, and recognition results of the positions of the main subjects.

The first region R1 is an isosceles trapezoidal region located at a lower central portion of the shooting region R and including the avatar AV1 and the car CR, which are the main subjects. The second region R2 is a rectangular region located at an upper central portion of the shooting region R and including a landscape such as the grassland and the sky behind the avatar AV1 and the car CR. The third region R3 is a pentagonal region located at a left side portion of the shooting region R and including a landscape such as Mount Fuji and the road on the left side of the avatar AV1 and the car CR. The fourth region R4 is a pentagonal region located at a right side portion of the shooting region R and including a landscape such as low mountains and the sky on the right side of the avatar AV1 and the car CR. The third region R3 and the fourth region R4 are symmetrical with respect to the center of the shooting region R.

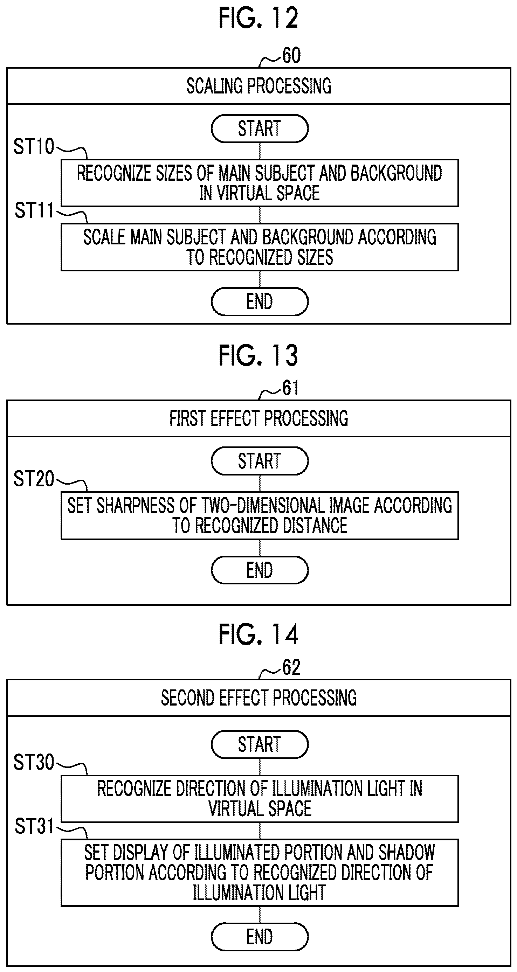

The processing unit 46 performs scaling processing 60, first effect processing 61, and second effect processing 62 on the two-dimensional image of each of the regions R1 to R4 (not shown for the region R4), respectively. The processing unit 46 performs the scaling processing 60 in accordance with the procedure of the flowchart shown in FIG. 12 as an example. That is, the processing unit 46 recognizes the sizes of the main subject and the background in the shooting region R of the virtual space VS (step ST10). Next, the processing unit 46 scales the main subject and the background according to the recognized sizes (step ST11). More specifically, in a case where the sizes of the main subject and the background recognized in step ST10 are less than a set value, the processing unit 46 enlarges the main subject and the background so that the sizes of the main subject and the background become the set value. On the other hand, in a case where the sizes of the main subject and the background recognized in step ST10 are greater than the set value, the processing unit 46 reduces the main subject and the background so that the sizes of the main subject and the background become the set value.

In addition, the processing unit 46 performs the first effect processing 61 in accordance with the procedure of the flowchart shown in FIG. 13 as an example. That is, the processing unit 46 sets the sharpness of the two-dimensional image of each of the regions R1 to R4 according to the recognition results of the distances, in the virtual space VS, between the camera CM, and the main subject and the background (step ST20). More specifically, the processing unit 46 sets the sharpness of the main subject and the background that are relatively close to the camera CM to be high, and sets the sharpness of the main subject and the background that are relatively far from the camera CM to be low. In other words, the processing unit 46 increases the degree of blurring of the main subject and the background that are relatively far from the camera CM.

Further, the processing unit 46 performs the second effect processing in accordance with the procedure of the flowchart shown in FIG. 14 as an example. That is, the processing unit 46 recognizes a direction of illumination light in the virtual space VS (step ST30). Here, the illumination light is sunlight or streetlight in a case of an outdoor environment, light from indoor lighting or the like in a case of an indoor environment. Additionally, the illumination light may also be light from a spotlight that can be installed at any position in the virtual space VS by the user U. The direction of the illumination light can be derived from the position information of a light source of the illumination light and the position information of each object in the shooting region R.

The processing unit 46 sets the display of the illuminated portion and the shadow portion of each object in the shooting region R according to the recognized direction of the illumination light (step ST31). For example, the processing unit 46 displays a highlight indicating reflected sunlight on a hood of the car CR or displays a shadow behind the avatar AV1.

The processing unit 46 displays the main subject in a central region CER on a bottom surface 66 of a cuboidal case 65. The central region CER is a region surrounded by a circle having a predetermined size. The center of the circle coincides with the center of the bottom surface 66. The case 65 is an example of a "columnar region" and a "rectangular parallelepiped region" according to the technology of the present disclosure. The bottom surface 66 is an example of a "bottom surface portion" according to the technology of the present disclosure. In addition, the central region CER is an example of a "preset position" according to the technology of the present disclosure.

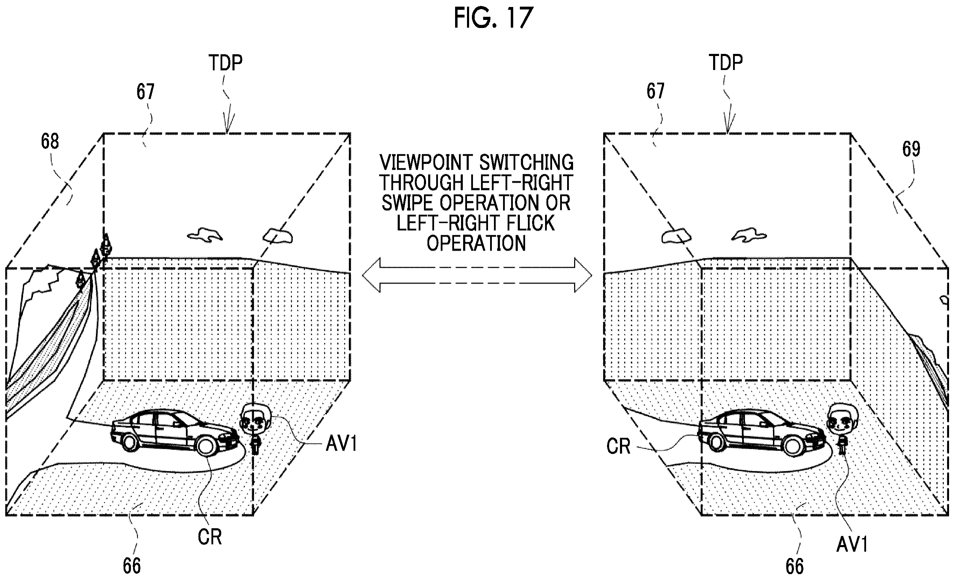

The processing unit 46 displays, among the two-dimensional images of the regions R1 to R4 on which the scaling processing 60, the first effect processing 61, and the second effect processing 62 have been performed, the two-dimensional image of the region R1 on the bottom surface 66 of the case 65, the two-dimensional image of the region R2 on a back surface 67 of the case 65, and the two-dimensional image of the region R3 on a left side surface 68 of the case 65. The two-dimensional image of the region R4 that is in a blind spot from the viewpoint in FIG. 11 is not displayed. The two-dimensional image of the region R4 is displayed on a right side surface 69 of the case 65 from a viewpoint different from that of FIG. 11 (refer to FIG. 17). The back surface 67, the left side surface 68, and the right side surface 69 are examples of a "back surface portion" according to the technology of the present disclosure.

In this manner, the three-dimensional photograph TDP is obtained by disposing the main subject and the background in the cuboidal case 65 and occupies a certain volume in the virtual space VS. In other words, the three-dimensional photograph TDP has a certain shape and size in the virtual space VS. Furthermore, the three-dimensional photograph TDP occupies a columnar region, and the columnar region is a rectangular parallelepiped region. Additionally, the three-dimensional photograph TDP includes one or more subjects in the virtual space, and the subject includes the main subject and the background. Here, the columnar region is a region including an upper surface and a bottom surface, which are two horizontal planes parallel to the ground in the virtual space VS, and side surfaces connecting the upper surface and the bottom surface.

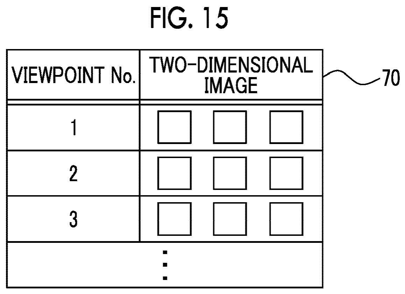

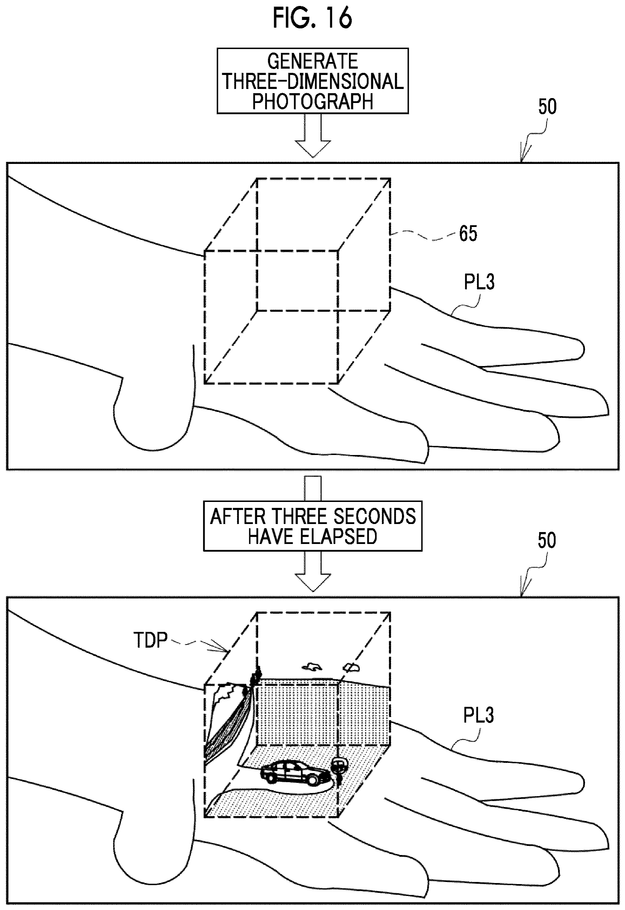

In FIG. 11, the three-dimensional photograph TDP from only one viewpoint is shown; however, the processing unit 46 generates a plurality of two-dimensional images viewed from different viewpoints, as shown in a table 70 in FIG. 15 as an example, stores the plurality of two-dimensional images in the storage 20B, and prepares the plurality of two-dimensional images in advance. In this case, since the direction of the illumination light changes depending on the viewpoint, the processing unit 46 changes the content of the second effect processing 62 according to the viewpoint. For example, the processing unit 46 changes the angle of the shadow of the avatar AV1 according to the viewpoint. The timing at which the plurality of two-dimensional images viewed from different viewpoints are prepared in advance may be any time before the reception of a switching instruction of the viewpoint from the user U is started. For example, the images need only be prepared by the time the images appear on the case 65 and the three-dimensional photograph TDP is displayed, as will be described below with reference to FIG. 16.

As shown in FIG. 16 as an example, after generating the three-dimensional photograph TDP, the processing unit 46 displays a palm PL3 of the avatar AV3 on the virtual space display screen 50, with an animation in which the case 65 is ejected from the camera CM inserted in between, for example. Then, the processing unit 46 causes the case 65, on which nothing is displayed, to appear on the palm PL3. Then, after three seconds have elapsed, the processing unit 46 causes an image to appear on the case 65 and displays the three-dimensional photograph TDP. In this case, the processing unit 46 performs an effect in which the image gradually appears on the case 65. In this manner, the three-dimensional photograph TDP has a size that fits within the palm PL3 of the avatar AV3. In this way, the processing unit 46 expresses the three-dimensional photograph TDP like an instant photograph ejected from the instant camera. Note that three seconds is an example of a "predetermined time" according to the technology of the present disclosure.

The three-dimensional photograph TDP can be moved from a palm PL of the avatar AV and can be placed, for example, on a shelf of furniture. However, regardless of where the three-dimensional photograph TDP is moved, the displayed main subject and background remain as they were at the time of capture and do not change.

As shown in FIG. 17 as an example, in a case where a left-right swipe operation or a left-right flick operation is performed by the user U, and the switching instruction of the viewpoint is received by the instruction receiving unit 45, the processing unit 46 switches the display of the main subject and the background in response to the switching instruction. Specifically, the processing unit 46 reads out the two-dimensional images of the viewpoint corresponding to the switching instruction from the two-dimensional images prepared in advance for each viewpoint as shown in the table 70 in FIG. 15. Then, by displaying the read-out two-dimensional images on the bottom surface 66 and the like of the case 65, the display of the main subject and the background is switched. Although only the three-dimensional photographs TDP from two viewpoints are illustrated in FIG. 17, three-dimensional photographs TDP from a plurality of viewpoints are present between the three-dimensional photographs TDP. In addition, although only the switching of the viewpoints in a left-right direction is illustrated in FIG. 17, the switching of the viewpoints in an up-down direction and oblique directions is also possible.

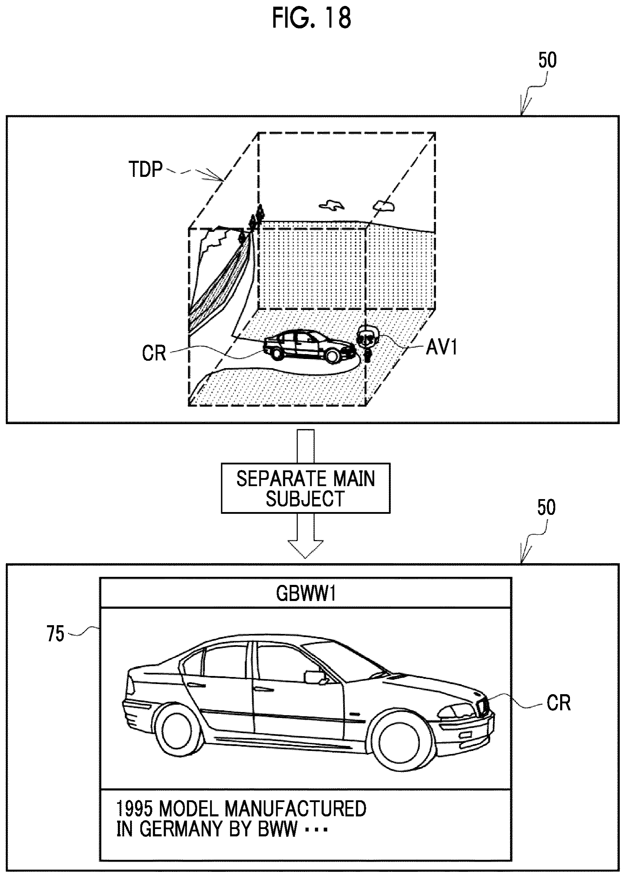

As shown in FIG. 18 as an example, in a case where a predetermined operation by the user U on the three-dimensional photograph TDP is received, the processing unit 46 generates the main subject appearing in the three-dimensional photograph TDP as an object separated from the three-dimensional photograph TDP. The predetermined operation by the user U on the three-dimensional photograph TDP is, for example, an operation of placing a finger on the main subject to be separated from the three-dimensional photograph TDP and performing a long press for three seconds. The processing unit 46 displays the separated main subject in a style of a trading card 75. This trading card 75 is also a type of object and is a target for buying and selling. The separated main subject can be operated by the avatar AV as an individual object. FIG. 18 shows an example in which the car CR is separated from the three-dimensional photograph TDP.

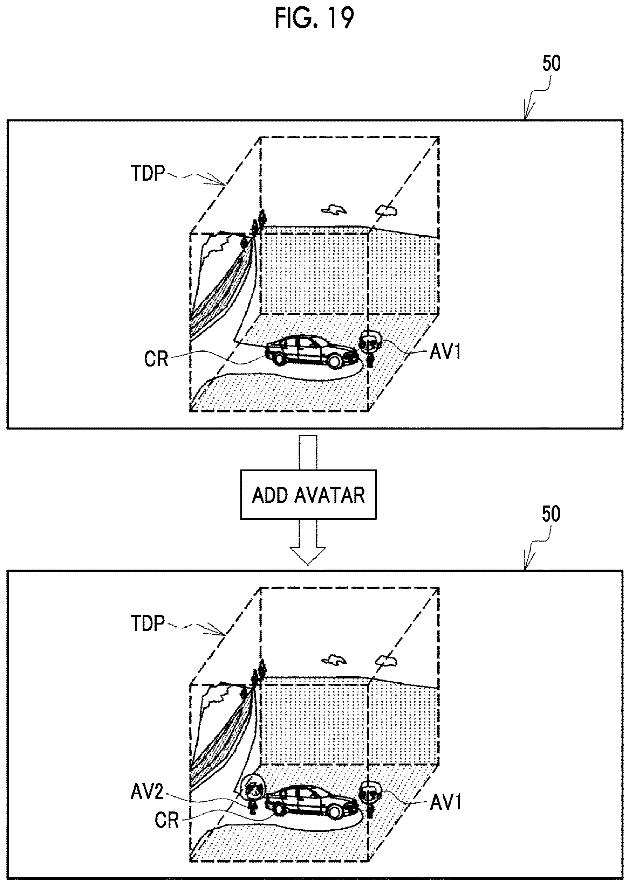

In addition, as shown in FIG. 19 as an example, the three-dimensional photograph TDP is editable. FIG. 19 shows an example in which the avatar AV2 is added to the three-dimensional photograph TDP. The editing includes not only the addition of the avatar AV shown as an example, but also the addition of an object other than the avatar AV, the deletion of an object, the addition of notes as if writing with a pen on an instant photograph in the real space, and the like. Further, the editing also includes changes in size, changes in color tone (such as saturation and white balance), changes in brightness, changes in sharpness, and the like. Furthermore, the editing also includes special effect processing such as monochrome, sepia, and vivid.

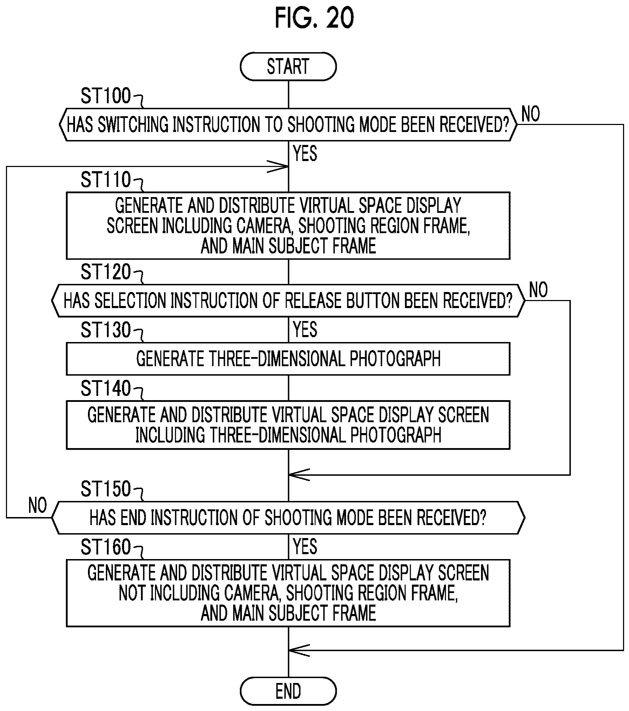

Next, the operation of the above-described configuration will be described with reference to a flowchart shown in FIG. 20 as an example. The CPU 22A of the user terminal 10 functions as the browser control unit 32 upon activation of the virtual space AP 30, as shown in FIG. 4. Additionally, the CPU 22B of the virtual space management server 12 functions as the instruction receiving unit 45, the processing unit 46, and the distribution control unit 47 upon activation of the operation program 35, as shown in FIG. 5.

The user U of the avatar AV that owns the camera CM operates the input device 25A of the user terminal 10 to input the switching instruction to the shooting mode. The switching instruction to the shooting mode is transmitted to the virtual space management server 12 by the browser control unit 32. In the virtual space management server 12, the switching instruction to the shooting mode is received by the instruction receiving unit 45 (YES in step ST100).

In a case where the switching instruction to the shooting mode is received by the instruction receiving unit 45, the virtual space display screen 50 shown in FIG. 10 is generated by the processing unit 46. The camera CM, the shooting region frame 51, and the main subject frame 52 are displayed on the virtual space display screen 50. The virtual space display screen 50 is output from the processing unit 46 to the distribution control unit 47 and is distributed to the user terminal 10, which is a transmission source of the switching instruction to the shooting mode, under the control of the distribution control unit 47 (step ST110).

In the user terminal 10, the virtual space display screen 50 shown in FIG. 10 is displayed on the display 24A under the control of the browser control unit 32. In a case where the release button 53 is selected by the user U on the virtual space display screen 50, the selection instruction of the release button 53 is transmitted to the virtual space management server 12 by the browser control unit 32. In the virtual space management server 12, the selection instruction of the release button 53 is received by the instruction receiving unit 45 (YES in step ST120).

In a case where the selection instruction of the release button 53 is received by the instruction receiving unit 45, as shown in FIG. 11 and the like, the three-dimensional photograph TDP is generated by the processing unit 46 (step ST130). After that, as shown in FIG. 16, the virtual space display screen 50 in which the case 65, on which nothing is displayed, is disposed on the palm PL of the avatar AV is generated by the processing unit 46 and is distributed to the user terminal 10, which is the transmission source of the selection instruction of the release button 53. After three seconds have elapsed, the virtual space display screen 50 in which the case 65, on which the image is displayed, that is, the three-dimensional photograph TDP, is disposed on the palm PL of the avatar AV, is generated by the processing unit 46 and is distributed to the user terminal 10, which is the transmission source of the selection instruction of the release button 53 (step ST140).

In the user terminal 10, under the control of the browser control unit 32, the virtual space display screen 50 in which the case 65, on which nothing is displayed, is disposed on the palm PL of the avatar AV is displayed on the display 24A. Then, after three seconds have elapsed, the virtual space display screen 50 in which the three-dimensional photograph TDP is disposed on the palm PL of the avatar AV is displayed on the display 24A. The processing of steps ST110 to ST140 is repeatedly performed while an end instruction of the shooting mode is not received by the instruction receiving unit 45 (NO in step ST150).

In a case where the end instruction of the shooting mode is received by the instruction receiving unit 45 (YES in step ST150), the virtual space display screen 50 in which the display of the camera CM, the shooting region frame 51, and the main subject frame 52 is removed is generated by the processing unit 46 and is distributed to the user terminal 10, which is the transmission source of the end instruction of the shooting mode (step ST160).

As described above, the CPU 22B of the virtual space management server 12 functions as the processing unit 46. The processing unit 46 generates the three-dimensional photograph TDP in the virtual space VS as the object.

A technique of capturing the virtual space VS with the camera CM as if the virtual space VS were a real space has conventionally existed. However, the photograph in the related art is a two-dimensional image and is not a three-dimensional photograph TDP that shows an object (main subject) in a stereoscopic manner as in the technology of the present disclosure. Therefore, it is not possible to appreciate the captured object from different viewpoints. On the other hand, with the three-dimensional photograph TDP of the technology of the present disclosure, the captured object can be appreciated from different viewpoints, and as mentioned above, the captured object can be moved to a desired location and enjoyed as a decoration. Accordingly, it is possible to further stimulate the interest of the user U. As a result, an increase in the number of users U who enjoy the virtual space VS can be achieved, leading to an expansion of revenue.

As shown in FIG. 2 and the like, the processing unit 46 generates the avatar AV of the user U as the object. Therefore, the user U can freely engage in activities in the virtual space VS by making full use of the avatar AV.

As shown in FIG. 10 and the like, the processing unit 46 generates the camera CM that receives the operation from the user U, as the object. Therefore, the user U can operate the camera CM in the virtual space VS in the same manner as in the real space.

As shown in FIG. 11, in a case where the operation by the user U on the camera CM is received, the processing unit 46 generates the three-dimensional photograph TDP. Therefore, the user U can operate the camera CM to capture the virtual space VS in the same manner as in the real space even in the virtual space VS.

As shown in FIG. 11 and the like, the three-dimensional photograph TDP occupies a certain volume in the virtual space VS. More specifically, the three-dimensional photograph TDP occupies the columnar region, and the columnar region is a rectangular parallelepiped region. Therefore, the interest of the user U can be further stimulated. In addition, the three-dimensional photograph TDP can be compactly organized. The three-dimensional photograph TDP is not limited to a columnar shape and may be a spherical shape, an ellipsoidal shape, or the like. In a case of a spherical shape or an ellipsoidal shape, for example, the main subject is disposed at the center of the spherical shape or the ellipsoidal shape, and the background is displayed behind the main subject like an omnidirectional image. Further, the three-dimensional photograph TDP is not limited to the rectangular parallelepiped and may also be a pentagonal prism, a hexagonal prism, or a cylindrical shape, or the like.

As shown in FIG. 11 and the like, the three-dimensional photograph TDP includes one or more subjects in the virtual space VS, and the subject includes the main subject and the background. Therefore, the user U can appreciate the three-dimensional photograph TDP as a landscape photograph or a commemorative photograph in the virtual space VS, just as in the real space. Note that the first subject is not limited to the main subject shown as an example. The subject appearing at the center of the shooting region R may be the first subject.

As shown in FIG. 11 and the like, the three-dimensional photograph TDP includes the bottom surface 66, the back surface 67, the left side surface 68, and the right side surface 69. The processing unit 46 displays the main subject in the central region CER of the bottom surface 66 and displays the background on the back surface 67, the left side surface 68, and the right side surface 69. Therefore, the main subject can be made stand out.

As shown in FIG. 17, the instruction receiving unit 45 receives the switching instruction of the viewpoint from the user U. The processing unit 46 switches the display of the main subject and the background in response to the switching instruction. Therefore, the user U can appreciate the three-dimensional photograph TDP from various viewpoints.

As shown in FIG. 15 and the like, the processing unit 46 prepares a plurality of two-dimensional images of the main subject and the background viewed from different viewpoints and switches the display of the main subject and the background by switching the display of the two-dimensional images in response to the switching instruction. Therefore, the switching of the display of the main subject and the background corresponding to the switching instruction can be smoothly performed, and it is possible to prevent a situation in which the switching of the display is delayed and the user U feels stress.

As shown in FIGS. 11 and 13, the processing unit 46 performs the first effect processing 61 on the main subject and the background according to the distances, in the virtual space VS, between the camera CM, and the main subject and the background. Therefore, it is possible to generate a realistic three-dimensional photograph TDP that is closer to the real space.

As shown in FIGS. 11 and 14, the processing unit 46 performs the second effect processing 62 on the main subject and the background according to the direction of the illumination light in the virtual space VS. Therefore, it is possible to generate a realistic three-dimensional photograph TDP that is closer to the real space.

As shown in FIG. 18, in a case where a predetermined operation by the user U on the three-dimensional photograph TDP is received, the processing unit 46 generates the main subject as an object separated from the three-dimensional photograph TDP. Therefore, it is possible to give the buying and selling or transfer of the three-dimensional photograph TDP the same effect as the buying and selling or transfer of the object.

As shown in FIG. 2 and the like, in the virtual space VS, a plurality of users U engage in activities as respective avatars AV. As shown in FIG. 6, the ownership information indicating which user U owns the object is stored in association with the object. Therefore, it is possible to clarify the ownership of the object.

As shown in FIGS. 7 and 8, the object is buyable and sellable. The processing unit 46 updates the ownership information in response to the buying and selling. Therefore, it is possible to reliably ascertain the transfer of ownership of the object associated with the buying and selling.

As shown in FIG. 8, in the initial state, the user ID indicating that the three-dimensional photograph TDP is owned by the user U who has captured the three-dimensional photograph TDP is stored in the three-dimensional photograph TDP as the ownership information. Therefore, it is possible to clarify the ownership of the three-dimensional photograph TDP immediately after the capture.

As shown in FIG. 8, the three-dimensional photograph TDP is buyable and sellable, and the processing unit 46 updates the user ID in response to the buying and selling. Therefore, it is possible to reliably ascertain the transfer of the ownership of the three-dimensional photograph TDP associated with the buying and selling.

As shown in FIG. 6, setting information indicating whether or not to permit the object to be captured in the three-dimensional photograph TDP is stored in association with the object. Therefore, it is possible to protect an object that is not to be captured in the three-dimensional photograph TDP.

As shown in FIG. 19, the three-dimensional photograph TDP is editable. Therefore, it is possible to customize the three-dimensional photograph TDP according to the preference of the user U.

As shown in FIG. 11 and the like, the three-dimensional photograph TDP has a certain shape and size in the virtual space VS. As shown in FIGS. 11 and 12, the processing unit 46 recognizes the size of the main subject in the virtual space VS and scales the main subject according to the recognized size to fit the main subject within a certain shape and size of the three-dimensional photograph TDP. Therefore, regardless of the size of the main subject, the main subject can be fitted within the three-dimensional photograph TDP and appreciated.

As shown in FIG. 16, the certain size is a size that fits within the palm PL of the avatar AV of the user U. Therefore, the user U can handle the three-dimensional photograph TDP in the virtual space VS in the same manner as a photograph in the real space.

As shown in FIG. 6 and the like, the camera CM is an instant camera, and the three-dimensional photograph TDP is an instant photograph ejected from the instant camera. As shown in FIG. 16, the processing unit 46 causes the image to appear on the instant photograph after a predetermined time has elapsed from the ejection. Therefore, the user U can experience the three-dimensional photograph TDP in the virtual space VS in the same manner as an instant photograph in the real space.

The three-dimensional photograph TDP is transferable between the avatars AV, as shown in FIG. 9. The processing unit 46 updates the ownership information to transfer ownership of the three-dimensional photograph TDP from the user U associated with the avatar AV that has transferred the three-dimensional photograph TDP to the user U associated with the avatar AV to which the three-dimensional photograph TDP has been transferred. Therefore, the user U can experience the three-dimensional photograph TDP in the virtual space VS in the same manner as an instant photograph in the real space and can give the three-dimensional photograph TDP to a friend who is also a user U, in the same manner as an instant photograph in the real space. Accordingly, it is possible to further stimulate the interest of the user U. Moreover, it is possible to reliably ascertain the transfer of the ownership of the three-dimensional photograph TDP associated with the transfer.

As shown in FIG. 10, the processing unit 46 displays the shooting region frame 51 indicating a region to be captured as the three-dimensional photograph TDP, that is, the shooting region R, on the virtual space display screen 50. Therefore, the user U can recognize the shooting region R at a glance. Additionally, the processing unit 46 displays the main subject frame 52 indicating the main subject on the virtual space display screen 50. Therefore, the user U can recognize the main subject at a glance.

### [Second Embodiment]

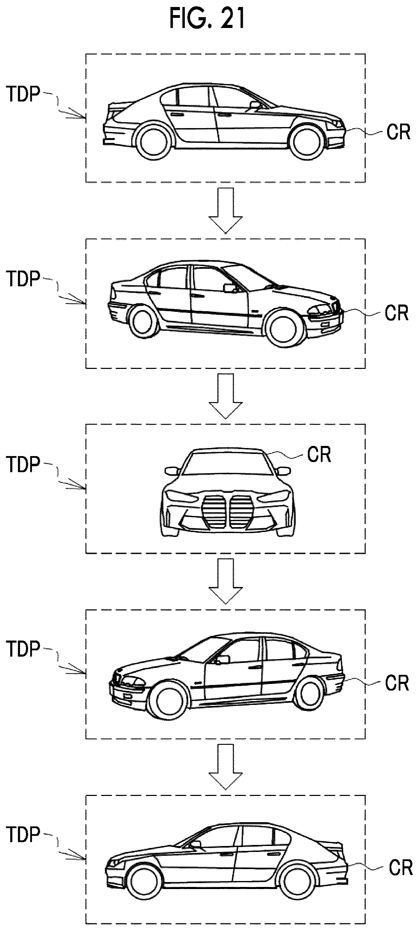

The three-dimensional photograph TDP is not limited to one that occupies the columnar region as in the first embodiment described above. As in the three-dimensional photograph TDP shown in FIG. 21 as an example, the main subject, here, the direction of the car CR, may be switched to appear as viewed from different viewpoints in response to the switching instruction of the viewpoint from the user U. Even with the three-dimensional photograph TDP, it is possible to further stimulate the interest of the user U. Although the display of the background is omitted in FIG. 21, in reality, the background is also displayed, and the background corresponding to the viewpoint is displayed behind the main subject. In addition, as in the case of FIG. 17, although only the switching of the viewpoints in the left-right direction is illustrated in FIG. 21, the switching of the viewpoints in the up-down direction and oblique directions is also possible.

The three-dimensional photograph TDP may be capable of generating a duplicate, like a reprint of a photograph in the real space. In this case, the three-dimensional photographs TDP having the same content can be transferred to a plurality of friends.

The three-dimensional photograph TDP may also be a moving image having a predetermined frame rate (for example, 30 frames per second (fps)). In this case, the processing unit 46 may record sound effects or background music (BGM) such as ambient noise flowing in the virtual space VS, music set by the user U, and even voice conversations between users U, and may play back the audio together with the moving image. While the avatar AV is holding the three-dimensional photograph TDP on the palm PL, audio may be played back. In addition, a Quick Response (QR) code (registered trademark) or a HyperText Markup Language (HTML) link indicating a Uniform Resource Identifier (URI) of audio may be displayed next to the three-dimensional photograph TDP or the like, and audio may be played back in response to the selection operation by the user U on the QR code or the HTML link.

The three-dimensional photograph TDP may be registered as a non-fungible token (NFT) art. For example, the three-dimensional photograph TDP capturing a scene of an event in the virtual space VS hosted in the virtual space VS by a well-known user U, where only users U having rights are allowed to participate, is registered as NFT art. By registering the three-dimensional photograph TDP as NFT art in this manner, it is possible to enhance the authenticity of the three-dimensional photograph TDP. In a case where the authenticity of the three-dimensional photograph TDP is enhanced, it also leads to a sense of security at the time of buying and selling of the three-dimensional photograph TDP. It is also possible to return a portion of the profit from the buying and selling of the three-dimensional photograph TDP to the user U who has hosted the event.

Additionally, the three-dimensional photograph TDP may be printed by a three-dimensional printing device. In this case, the main subject is three-dimensionally printed in a stereoscopic manner, and the unevenness of the background, such as mountains, is printed in a stereoscopic manner on wall surfaces surrounding the main subject.

The hardware configuration of the computer that constitutes the virtual space management server 12 can be variously modified. For example, the virtual space management server 12 may be configured using a plurality of physically separate computers as hardware, for the purpose of improving processing capability and reliability. For example, the functions of the instruction receiving unit 45 and the distribution control unit 47, and the function of the processing unit 46 may be distributed across two computers. In this case, the virtual space management server 12 is configured using two computers.

In this manner, the hardware configuration of the computer of the virtual space management server 12 can be appropriately changed according to the required performance, such as processing capability, safety, and reliability. Further, not only hardware but also APs such as the virtual space AP 30 and the operation program 35 can, of course, be duplicated, or distributed and stored across a plurality of storage units for the purpose of ensuring safety and reliability.

In each of the above-described embodiments, for example, as a hardware structure of a processing unit that executes various processes such as the browser control unit 32, the instruction receiving unit 45, the processing unit 46, and the distribution control unit 47, various types of processors as described below can be used. The various types of processors include, in addition to the CPUs 22A and 22B, which are general-purpose processors that function as various processing units by executing software (the virtual space AP 30 and the operation program 35), a programmable logic device (PLD), such as a field-programmable gate array

(FPGA), which is a processor capable of having a circuit configuration changed after manufacturing, and/or a dedicated electric circuit, such as an application specific integrated circuit (ASIC), which is a processor having a circuit configuration specifically designed to execute specific processing.

One processing unit may be configured using one of the various types of processors or may be configured using a combination of two or more processors of the same type or different types (for example, a combination of a plurality of FPGAs and/or a combination of a CPU and an FPGA). Alternatively, a plurality of processing units may also be configured using a single processor.

As an example in which a plurality of processing units are configured using a single processor, first, there is a form in which a processor is configured using a combination of at least one CPU and software, as represented by a computer such as a client or a server, and the processor functions as a plurality of processing units. Second, there is a form in which a processor that implements the functions of an entire system including a plurality of processing units using a single integrated circuit (IC) chip is used, as represented by a system-on-chip (SoC). In this manner, the various processing units are configured, as hardware structures, using one or more of the various types of processors described above.

Furthermore, as a more specific hardware structure of the various types of processors, an electric circuit (circuitry) formed by combining circuit elements such as semiconductor elements can be used.

From the above description, it is possible to understand the technology described in the following supplementary claims.

### [Supplementary Claim 1]

A virtual space management apparatus that manages a virtual space including an object, the virtual space management apparatus comprising:
a processor,
in which the processor is configured to:
   generate a three-dimensional photograph in the virtual space, as the object.

### [Supplementary Claim 2]

The virtual space management apparatus according to Supplementary Claim 1,
in which the processor is configured to:
generate an avatar of a user, as the object.

### [Supplementary Claim 3]

The virtual space management apparatus according to Supplementary Claim 1 or 2,
in which the processor is configured to:
generate a camera that receives an operation from a user, as the object.

### [Supplementary Claim 4]

The virtual space management apparatus according to Supplementary Claim 3,
in which the processor is configured to:
in a case where the operation by the user on the camera is received, generate the three-dimensional photograph.

### [Supplementary Claim 5]

The virtual space management apparatus according to any one of Supplementary Claims 1 to 4,
in which the three-dimensional photograph occupies a certain volume in the virtual space.

### [Supplementary Claim 6]

The virtual space management apparatus according to Supplementary Claim 5,
in which the three-dimensional photograph occupies a columnar region.

### [Supplementary Claim 7]

The virtual space management apparatus according to Supplementary Claim 6,
in which the columnar region is a rectangular parallelepiped region.

### [Supplementary Claim 8]

The virtual space management apparatus according to any one of Supplementary Claims 3 to 7,
in which the three-dimensional photograph includes one or more subjects in the virtual space.

### [Supplementary Claim 9]

The virtual space management apparatus according to Supplementary Claim 8,
in which the subject includes a first subject and a background.

### [Supplementary Claim 10]

The virtual space management apparatus according to Supplementary Claim 9,
in which the three-dimensional photograph includes a bottom surface portion and a back surface portion.

### [Supplementary Claim 11]

The virtual space management apparatus according to Supplementary Claim 10,
in which the processor is configured to:
display the first subject at a preset position on the bottom surface portion; and
display the background on the back surface portion.

### [Supplementary Claim 12]

The virtual space management apparatus according to any one of Supplementary Claims 9 to 11,
in which the processor is configured to:
receive a switching instruction of a viewpoint from the user; and
switch display of the first subject and the background in response to the switching instruction.

### [Supplementary Claim 13]

The virtual space management apparatus according to Supplementary Claim 12,
in which the processor is configured to:
prepare a plurality of two-dimensional images of the first subject and the background viewed from different viewpoints; and
switch display of the first subject and the background by switching display of the two-dimensional images in response to the switching instruction.

### [Supplementary Claim 14]

The virtual space management apparatus according to any one of Supplementary Claims 9 to 13,
in which the processor is configured to:
perform first effect processing on the first subject and the background according to distances, in the virtual space, between the camera, and the first subject and the background.

### [Supplementary Claim 15]

The virtual space management apparatus according to any one of Supplementary Claims 9 to 14,
in which the processor is configured to:
perform second effect processing on the first subject and the background according to a direction of illumination light in the virtual space.

### [Supplementary Claim 16]

The virtual space management apparatus according to any one of Supplementary Claims 9 to 15,
in which the processor is configured to:
in a case where a predetermined operation by the user on the three-dimensional photograph is received, generate the first subject as an object separated from the three-dimensional photograph.

### [Supplementary Claim 17]

The virtual space management apparatus according to any one of Supplementary Claims 1 to 16,
in which, in the virtual space, a plurality of users engage in activities as respective avatars, and
ownership information indicating which user owns the object is stored in association with the object.

### [Supplementary Claim 18]

The virtual space management apparatus according to Supplementary Claim 17,
in which the object is buyable and sellable, and
the processor is configured to:
   update the ownership information in response to the buying and selling.

### [Supplementary Claim 19]

The virtual space management apparatus according to Supplementary Claim 17 or 18,
in which, in an initial state, an identifier indicating that the three-dimensional photograph is owned by a user who has captured the three-dimensional photograph is stored in the three-dimensional photograph as the ownership information.

### [Supplementary Claim 20]

The virtual space management apparatus according to Supplementary Claim 19,
in which the three-dimensional photograph is buyable and sellable, and
the processor is configured to:
   update the identifier in response to the buying and selling.

### [Supplementary Claim 21]

The virtual space management apparatus according to any one of Supplementary Claims 1 to 20,
in which setting information indicating whether or not to permit the object to be captured in the three-dimensional photograph is stored in association with the object.

### [Supplementary Claim 22]

The virtual space management apparatus according to any one of Supplementary Claims 1 to 4, 8 to 11, and 14 to 21,
in which the processor is configured to:
receive a switching instruction of a viewpoint from a user; and
switch display of the three-dimensional photograph in response to the switching instruction.

### [Supplementary Claim 23]

The virtual space management apparatus according to any one of Supplementary Claims 1 to 22,
in which the three-dimensional photograph is editable.

### [Supplementary Claim 24]

The virtual space management apparatus according to any one of Supplementary Claims 9 to 23,
in which the three-dimensional photograph has a certain shape and size in the virtual space.

### [Supplementary Claim 25]

The virtual space management apparatus according to Supplementary Claim 24,
in which the processor is configured to:
recognize a size of the first subject in the virtual space; and
scale the first subject according to the recognized size to fit the first subject within the certain shape and size of the three-dimensional photograph.

### [Supplementary Claim 26]

The virtual space management apparatus according to Supplementary Claim 24 or 25,
in which the certain size is a size that fits within a palm of an avatar of the user.

### [Supplementary Claim 27]

The virtual space management apparatus according to any one of Supplementary Claims 3 to 26,
in which the camera is an instant camera, and the three-dimensional photograph is an instant photograph ejected from the instant camera, and
the processor is configured to:
   cause an image to appear on the instant photograph after a predetermined time has elapsed from the ejection.

### [Supplementary Claim 28]

The virtual space management apparatus according to any one of Supplementary Claims 1 to 27,
in which, in the virtual space, a plurality of users engage in activities as respective avatars,
ownership information indicating which user owns the three-dimensional photograph is stored in the three-dimensional photograph in association with the three-dimensional photograph, and the three-dimensional photograph is transferable between the avatars, and
the processor is configured to:
   update the ownership information to transfer ownership of the three-dimensional photograph from a user associated with an avatar that has transferred the three-dimensional photograph to a user associated with an avatar to which the three-dimensional photograph has been transferred.

### [Supplementary Claim 29]

The virtual space management apparatus according to any one of Supplementary Claims 1 to 28,
in which the processor is configured to:
display a frame indicating a region to be captured as the three-dimensional photograph on a display screen of the virtual space.

### [Supplementary Claim 30]

The virtual space management apparatus according to any one of Supplementary Claims 9 to 29,
in which the processor is configured to:
display a frame indicating the first subject on a display screen of the virtual space.

The technology of the present disclosure can also be combined as appropriate with various embodiments and/or various modification examples mentioned above. Additionally, the technology of the present disclosure is not limited to each of the above-described embodiments, and various configurations can, of course, be employed without departing from the gist. Further, the technology of the present disclosure extends not only to the program but also to a storage medium that stores the program in a non-transitory manner.

The described contents and the shown contents presented above are detailed descriptions of portions related to the technology of the present disclosure and are merely one example of the technology of the present disclosure. For example, the descriptions of the above-described configurations, functions, operations, and effects are descriptions of one example of the configurations, functions, operations, and effect of the portions related to the technology of the present disclosure. Therefore, obviously, within the scope that does not depart from the gist of the technology of the present disclosure, unnecessary portions may be deleted, new elements may be added, or replacement may be made with respect to the described contents and the shown contents presented above. In addition, in order to avoid confusion and facilitate understanding of the portions related to the technology of the present disclosure, descriptions of common general knowledge and the like that do not require special descriptions for enabling the implementation of the technology of the present disclosure have been omitted from the described contents and the shown contents presented above.

In the present specification, "A and/or B" is synonymous with "at least one of A or B". That is, "A and/or B" means that A alone may be used, B alone may be used, or a combination of A and B may be used. Further, in the present specification, in a case where three or more items are expressed in combination using "and/or", the same concept as that of "A and/or B" applies.

All documents, patent applications, and technical standards described in the present specification are incorporated by reference into the present specification to the same extent as in a case where the individual documents, patent applications, and technical standards were specifically and individually indicated to be incorporated by reference.

## Claims

1. A virtual space management apparatus that manages a virtual space including an object, the virtual space management apparatus comprising:
a processor,
wherein the processor is configured to:
generate a three-dimensional photograph in the virtual space, as the object.

2. The virtual space management apparatus according to claim 1,
wherein the processor is configured to:
generate an avatar of a user, as the object.

3. The virtual space management apparatus according to claim 1,
wherein the processor is configured to:
generate a camera that receives an operation from a user, as the object.

4. The virtual space management apparatus according to claim 3,
wherein the processor is configured to:
in a case where the operation by the user on the camera is received, generate the three-dimensional photograph.

5. The virtual space management apparatus according to claim 1,
wherein the three-dimensional photograph occupies a certain volume in the virtual space.

6. The virtual space management apparatus according to claim 5,
wherein the three-dimensional photograph occupies a columnar region.

7. The virtual space management apparatus according to claim 6,
wherein the columnar region is a rectangular parallelepiped region.

8. The virtual space management apparatus according to claim 3,
wherein the three-dimensional photograph includes one or more subjects in the virtual space.

9. The virtual space management apparatus according to claim 8,
wherein the subject includes a first subject and a background.

10. The virtual space management apparatus according to claim 9,
wherein the three-dimensional photograph includes a bottom surface portion and a back surface portion.

11. The virtual space management apparatus according to claim 10,
wherein the processor is configured to:
display the first subject at a preset position on the bottom surface portion; and
display the background on the back surface portion.

12. The virtual space management apparatus according to claim 9,
wherein the processor is configured to:
receive a switching instruction of a viewpoint from the user; and
switch display of the first subject and the background in response to the switching instruction.

13. The virtual space management apparatus according to claim 12,
wherein the processor is configured to:
prepare a plurality of two-dimensional images of the first subject and the background viewed from different viewpoints; and
switch display of the first subject and the background by switching display of the two-dimensional images in response to the switching instruction.

14. The virtual space management apparatus according to claim 9,
wherein the processor is configured to:
perform first effect processing on the first subject and the background according to distances, in the virtual space, between the camera, and the first subject and the background.

15. The virtual space management apparatus according to claim 9,
wherein the processor is configured to:
perform second effect processing on the first subject and the background according to a direction of illumination light in the virtual space.

16. The virtual space management apparatus according to claim 9,
wherein the processor is configured to:
in a case where a predetermined operation by the user on the three-dimensional photograph is received, generate the first subject as an object separated from the three-dimensional photograph.

17. The virtual space management apparatus according to claim 1,
wherein, in the virtual space, a plurality of users engage in activities as respective avatars, and
ownership information indicating which user owns the object is stored in association with the object.

18. The virtual space management apparatus according to claim 17,
wherein the object is buyable and sellable, and
the processor is configured to:
update the ownership information in response to the buying and selling.

19. The virtual space management apparatus according to claim 17,
wherein, in an initial state, an identifier indicating that the three-dimensional photograph is owned by a user who has captured the three-dimensional photograph is stored in the three-dimensional photograph as the ownership information.

20. The virtual space management apparatus according to claim 19,
wherein the three-dimensional photograph is buyable and sellable, and
the processor is configured to:
update the identifier in response to the buying and selling.

21. The virtual space management apparatus according to claim 1,
wherein setting information indicating whether or not to permit the object to be captured in the three-dimensional photograph is stored in association with the object.

22. The virtual space management apparatus according to claim 1,
wherein the processor is configured to:
receive a switching instruction of a viewpoint from a user; and
switch display of the three-dimensional photograph in response to the switching instruction.

23. The virtual space management apparatus according to claim 1,
wherein the three-dimensional photograph is editable.

24. The virtual space management apparatus according to claim 9,
wherein the three-dimensional photograph has a certain shape and size in the virtual space.

25. The virtual space management apparatus according to claim 24,
wherein the processor is configured to:
recognize a size of the first subject in the virtual space; and
scale the first subject according to the recognized size to fit the first subject within the certain shape and size of the three-dimensional photograph.

26. The virtual space management apparatus according to claim 24,
wherein the certain size is a size that fits within a palm of an avatar of the user.

27. The virtual space management apparatus according to claim 3,
wherein the camera is an instant camera, and the three-dimensional photograph is an instant photograph ejected from the instant camera, and
the processor is configured to:
cause an image to appear on the instant photograph after a predetermined time has elapsed from the ejection.

28. The virtual space management apparatus according to claim 1,
wherein, in the virtual space, a plurality of users engage in activities as respective avatars,
ownership information indicating which user owns the three-dimensional photograph is stored in the three-dimensional photograph in association with the three-dimensional photograph, and the three-dimensional photograph is transferable between the avatars, and
the processor is configured to:
update the ownership information to transfer ownership of the three-dimensional photograph from a user associated with an avatar that has transferred the three-dimensional photograph to a user associated with an avatar to which the three-dimensional photograph has been transferred.

29. The virtual space management apparatus according to claim 1,
wherein the processor is configured to:
display a frame indicating a region to be captured as the three-dimensional photograph on a display screen of the virtual space.

30. The virtual space management apparatus according to claim 9,
wherein the processor is configured to:
display a frame indicating the first subject on a display screen of the virtual space.

31. An operation method of a virtual space management apparatus that manages a virtual space including an object, the operation method comprising:
generating a three-dimensional photograph in the virtual space, as the object.

32. An operation program of a virtual space management apparatus that manages a virtual space including an object, the operation program causing a computer to execute a process comprising:
generating a three-dimensional photograph in the virtual space, as the object.
